# EUROPEAN PATENT SPECIFICATION

(11) **EP 1 324 099 B1**
(45) Date of publication and mention of the grant of the patent: **05.09.2007**
(21) Application number: 01970224.0
(22) Date of filing: 26.09.2001
(51) Int. Cl.: G02B 26/00, G01P 15/00, G01L 1/24, G01L 11/02, G02B 6/12, G01P 15/08, G02B 6/34

(54) **OPTICAL FIBER CONNECTOR AND OPTICAL DEVICE**
FASEROPTISCHER VERBINDER UND OPTISCHES BAUELEMENT
CONNECTEUR A FIBRE OPTIQUE ET DISPOSITIF OPTIQUE

(30) Priority: 26.09.2000 JP 2000292713
(43) Date of publication of application: 02.07.2003
(73) Proprietor: HAMAMATSU PHOTONICS K.K., Higashi-ku Hamamatsu-shi Shizuoka 435-8558 (JP)
(72) Inventor: TAKIGUCHI, Yoshihiro, c/o Hamamatsu Photonics K.K., Hamamatsu-shi, Shizuoka 435-8558 (JP); ITOH, Kensaku, Fuchu-machi, Nei-gun, Toyama 939-2703 (JP); YAMANAKA, Junpei, Mizuho-ku, Nagoya-shi, Aichi 467-0808 (JP); TAKASAKA, Masaomi, c/o Hamamatsu Photonics K.K., Hamamatsu-shi, Shizuoka 435-8558 (JP)
(74) Representative: Rummler, Felix
(86) International application number: PCT/JP2001/008382
(87) International publication number: WO 2002/027382

(56) References cited:
- WO-A-00/21905
- WO-A-98/53351
- WO-A2-98/59219
- US-A- 5 751 466
- US-A- 6 093 246

## Description

### Technical Field

This invention concerns an optical fiber coupling device and an optical device.

### Background Art

Optical fiber coupling devices that use optical fibers have been known since priorly, and such devices couple light, transmitted from one optical fiber, to another optical fiber.

US-A-5751466, US-A-6093246, WO 98/53351 A2 and WO 00/21905 A1 describe prior art arrangements pertaining to the technological background of the invention.

### Disclosure of the Invention

However, with an optical fiber coupling device using optical fibers, the wavelength could not be varied. An object of this invention is to provide an optical fiber coupling device with which the wavelength can be varied.

This invention's optical fiber coupling device comprises: a fixing part, to which the respective ends of two optical fibers are fixed; a photonic crystal, disposed in the light path of light that propagates between the abovementioned ends; and an external force application means, which applies an external force to the photonic crystal.

With this device, when an external force is applied by the external force application means to the photonic crystal while light is being propagated inside one optical fiber, the photonic band gap of the photonic crystal changes and light of a wavelength that is in accordance with this photonic band gap is output from the other optical fiber. Variable wavelength optical fiber coupling can thus be realized. A description concerning the photonic crystal shall now be given.

A semiconductor monocrystal is a substance with which specific atoms are aligned in a periodic and regular manner. Its electron propagation characteristics are determined by the atomic interval inside the semiconductor crystal. That is, a semiconductor has an energy band gap, and this energy band gap is determined by the wave properties of electrons and the periodic potential of the atoms.

Meanwhile, a photonic crystal is a three-dimensional structure wherein substances that exhibit a potential difference with respect to light, in other words, substances with a refractive index difference are aligned in a period close to the wavelength of light. Such substances that make up a photonic crystal have been proposed by Yablonovich and others.

Within a photonic crystal, the optical propagation characteristics are limited by the constraints of the wave properties of light. That is, the propagation of light inside a photonic crystal are subject to restrictions in a manner similar to the propagation of electrons in a semiconductor. In a photonic crystal, a forbidden zone for light or so-called photonic band gap exists, and due to the existence of this band gap, light of a specific wavelength band cannot propagate inside the crystal.

Various photonic crystals have been proposed in the prior art. For example, there are photonic crystals wherein submicron particles are aligned in a period close to the wavelength of light. For microwave bands, there are photonic crystals in which polymer spheres are aligned within space as the particles.

Besides these, there are photonic crystals with which polymer spheres are hardened inside a metal and thereafter the polymer spheres are dissolved chemically to formperiodic microscopic spaces inside the metal, photonic crystals with which holes are bored at equal intervals within a metal, photonic crystals with which regions of which the refractive index different from that of the periphery in the solid material by use of a laser, photonic crystals with which a photopolymerizing polymer is processed to a groove-like form using a lithography technique, etc.

In the description that follows, light that is input into a photonic crystal shall be referred to as "input light" and light that is output from a photonic crystal upon passage through the photonic crystal shall be referred to as "output light."

In order to achieve adequate wavelength variation, the photonic crystal preferably has plasticity, and such a photonic crystal has microspheres or bubbles contained inside a gel-like substance.

A wavelength shifter which is related to but does not embody this invention comprises: a fixing part to which the end of a single optical fiber is fixed; a reflecting mirror, disposed along the light path of the light emitted from the abovementioned end and disposed so that the light will be returned by reflection to the abovementioned end; a photonic crystal, disposed in the light path between the abovementioned end and the reflecting mirror; and an external force application means, which applies an external force to the photonic crystal.

Here, though the light that is emitted from the single optical fiber is reflected by the reflecting mirror, since a photonic crystal is disposed inside the light path, the light output from the photonic crystal can be varied in accordance with the external force applied by the external force application means.

Such optical devices as described above can be used as acceleration sensors. That is, it is provided in an acceleration sensor to be provided on a moving body, an acceleration sensor comprising: a fixing part, to which an end part of an optical fiber is fixed; a photonic crystal, disposed in the light path of the light emitted from the abovementioned end part; and a light detector, detecting the light emitted from the photonic crystal.

When the moving body undergoes an accelerated motion, the photonic crystal deforms at least by its own weight and its photonic band gap therefore changes. In a case where a mass body of a predetermined mass is put in contact with the photonic crystal, the mass body urges the photonic crystal in accordance with the acceleration.

Since the intensity and wavelength of the light that is output from the photonic crystal varies in accordance with the acceleration, when this light is detected by the light detector, the detected value will indicate the acceleration. In a case where external force is applied to the photonic crystal so that a fixed detected value will be detected by the light detector, the control amount of the external force applied to the photonic crystal will indicate the acceleration.

Also, a pressure sensor which is related to but does not embody the present invention comprises: a fixing part, to which an end part of an optical fiber is fixed; a photonic crystal, disposed in the light path of the light emitted from the above mentioned end part; a light detector, detecting the light emitted from the photonic crystal; and a pressing part, disposed at a position enabling pressing of the photonic crystal.

When the pressing part is pressed, since the photonic crystal deforms in accordance with the pressure, the detected value detected by the light detector or the control amount of the external force applied to the photonic crystal will indicate the pressure in a manner similar to the above-described acceleration sensor.

For stabilization of the amount of deformation of the photonic crystal, the temperature of the photonic crystal is preferably constant. In such a case, the optical device comprises: a fixing part, to which an end part of an optical fiber is fixed; a photonic crystal, having plasticity and being disposed in the light path of the light emitted from the abovementioned end part; a heater, heating the photonic crystal; and a temperature sensor, measuring the temperature of the photonic crystal; and the power supplied to the heater is controlled in accordance with the temperature measured by the temperature sensor.

By controlling the power supplied to the heater so that the temperature measured by the temperature sensor will be constant, the temperature of the photonic crystal can be made constant to enable wavelength selection of high precision.

Also, the invention provides an optical device comrpising the above optical fiber coupling device and a light detector, outputting an electric signal for driving the external force application means in accordance with input light, and the input light is introduced via the optical fiber into the light detector.

In this case, since the input light is input into the light detector via the optical fiber and the light detector outputs an electric signal for driving the external force application means, the external force application means is driven and the photonic crystal deforms . Besides this input light, light is input via the optical fiber into the photonic crystal as signal light and this signal light is output from the photonic crystal upon being subject to wavelength selection due to deformation of the photonic crystal.

Also the optical device comprises: a fixing part, to which an end part of an optical fiber is fixed; and photonic crystals, having plasticity and being disposed in the light path of the light emitted from the abovementioned end part; and the photonic crystals comprise at least two photonic crystals that differ in photonic band gap.

In this case, since the two photonic crystals having different photonic band gaps differ in wavelength selectivity, more precise wavelength selection can be realized by the combination.

### Brief Description of the Drawings

Fig. 1 is an explanatory diagram of an optical device of an embodiment that is an optical fiber coupling device.
Fig. 2 is a perspective view of a photonic crystal 2.
Figs. 3A, 3B, and 3C are graphs, showing the wavelength (nm) dependence of the transmittance (arbitrary constant) of output light by photonic crystal with a multilayer film structure, in other words, a dichroic mirror.
Fig. 4 is an explanatory diagram of an optical device that is a wavelength shifter which is related to but does not embody the present invention.
Fig. 5 is an explanatory diagram of an optical device that is a pressure sensor which is related to but does not embody the present invention.
Fig. 6 is an explanatory diagram of an optical device of another embodiment that is an optical fiber coupling device.
Fig. 7 is an explanatory diagram of an optical device of yet another embodiment that is an optical fiber coupling device.
Fig. 8 is an explanatory diagram of an optical device with an additional arrangement which is related to but does not embody the present invention.

Optical devices of embodiments of this invention shall now be described. The same elements or elements having the same functions shall be provided with the same symbols and redundant explanations shall be omitted.

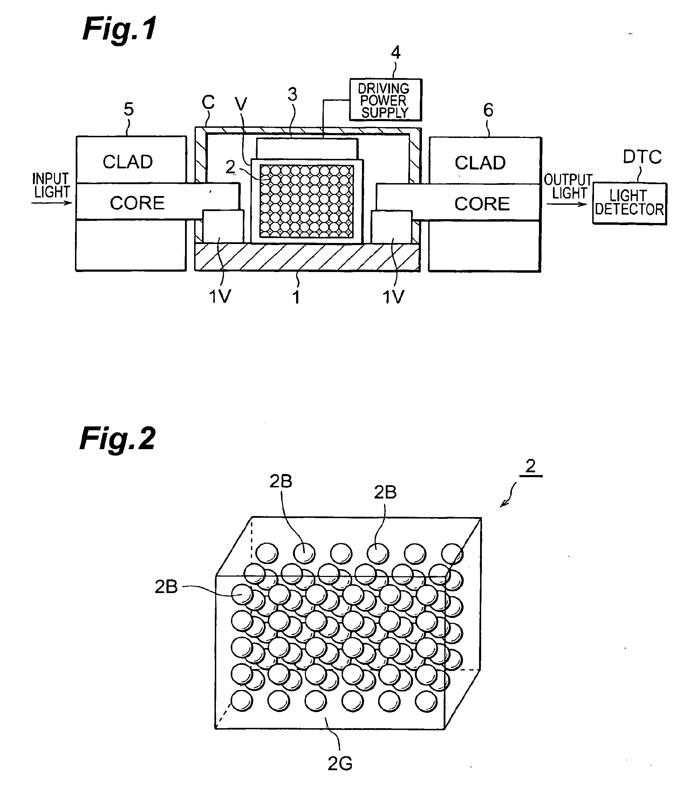

Fig. 1 is an explanatory diagram of an optical device of an embodiment that is an optical fiber coupling device. This optical fiber coupling device outputs output light that has been selected to be of a desired wavelength band among the wavelength band of input light. Each of the optical fibers comprises a core and a clad. A photonic crystal 2 is set on a base 1, and this photonic crystal 2 is urged by a piezoelectric element (external force application means) 3, which applies a pressure to photonic crystal 2 or reduces a pressure applied to photonic crystal 2.

Photonic crystal 2 deforms in a precise manner in accordance with the application of an external force and is a substance with which the photonic band gap changes in accordance with the deformation. When photonic crystal 2 is deformed by piezoelectric element 3, its photonic band gap changes. Piezoelectric element 3 is controlled by a driving power supply 4 and driving power supply 4 controls the magnitude and duration of application of the abovementioned external force.

Input light is input into photonic crystal 2 through a first optical fiber 5 that propagates light. Components of specific wavelengths of the input light cannot pass through photonic crystal 2 and light of a predetermined wavelength band is selected in accordance with the photonic band gap (optical response characteristics) and output as output light from photonic crystal 2 and detected by a light detector DTC. The output light is input into a second optical fiber 6 that propagates light and is output to the exterior of the device via second optical fiber 6. The optical coupling characteristics across first and second optical fibers 5 and 6 thus changes in accordance with the application of an external force.

The respective ends of optical fibers 5 and 6 are fixed to V groove bases 1V provided on base 1 and are positioned along with base 1 inside a cover member C that makes up a housing.

With this optical device, the photonic band gap of photonic crystal 2 is changed by the application of an external force to photonic crystal 2, and photonic crystal 2 has plasticity. Photonic crystal 2 may also have elasticity. Piezoelectric element 3 comprises a PZT.

Since photonic crystal 2 has plasticity, whenphotonic crystal 2 is deformed by applying an external force, the photonic band gap changes greatly and the wavelength of the output light fromphotonic crystal 2 thus changes adequately. With such an optical device, since effective wavelength selection can be performed even if the volume of photonic crystal 2 itself is made small, the entire device can be made compact. Also, since photonic crystal 2 will exhibit its effects as long as its size is at least 10 times the wavelength, photonic crystal 2 preferably has a size of 10µm square or more.

As has been described above, the above fiber coupling device, wherein fixing parts 1V, to which the respective ends of two optical fibers 5 and 6 are fixed, photonic crystal 2, disposed inside the light path of light that propagates across the abovementioned ends, and external force application means 3, which applies an external force to photonic crystal 2, are provided.

When an external force is applied by external force application means 3 to photonic crystal 2 while light is being propagated inside one optical fiber 5, the photonic band gap of photonic crystal 2 changes and light of a wavelength that is in accordance with this photonic band gap is output from the other optical fiber 5. Variable wavelength optical fiber coupling can thus be realized. Photonic crystal 2 is housed inside a vessel V.

Fig. 2 is a perspective view of photonic crystal 2.

This photonic crystal 2 has a plurality of microspheres (optical microcrystals) 2B of silica or barium titanate contained inside a gel-like substance 2G. This photonic crystal 2 can be deformed readily. Inside substance 2G, microspheres 2B are aligned uniformly in a regular manner of a period close to the wavelength of light. The interval between microspheres 2B is one-half to one-fourth the wavelength of light that is to be selected, and microspheres 2B are transparent to this wavelength. When light of a wavelength band Δλ (containing λ₁) is made incident into photonic crystal 2, only a component of a specific wavelength band λ₁ is transmitted through photonic crystal 2 in accordance with the photonic band gap.

Since the gel is deformed readily by an external force, the photonic band gap of photonic crystal 2 changes readily. As a result of this change, the abovementioned wavelength band λ₁ that is transmitted through photonic crystal 2 changes . Microspheres 2B differ in refractive index from substance 2G and both of these are transparent to light of the selected wavelength.

For example, a material having an ultraviolet-curing resin mixed therein may be used as a sol material and gelling may be accomplished by irradiating this material with ultraviolet rays. A mixture of a crosslinking agent and a photopolymerization initiator in acrylamide is a representative example of an ultraviolet-curing resin, and various other examples are known since priorly.

Since it is sufficient for the number of periodic structures of microspheres 2B to be approximately 50, photonic crystal 2 will function adequately even if it is an element with a maximum size of 100µm square. Compactness of a device can thus be realized by using this photonic crystal 2.

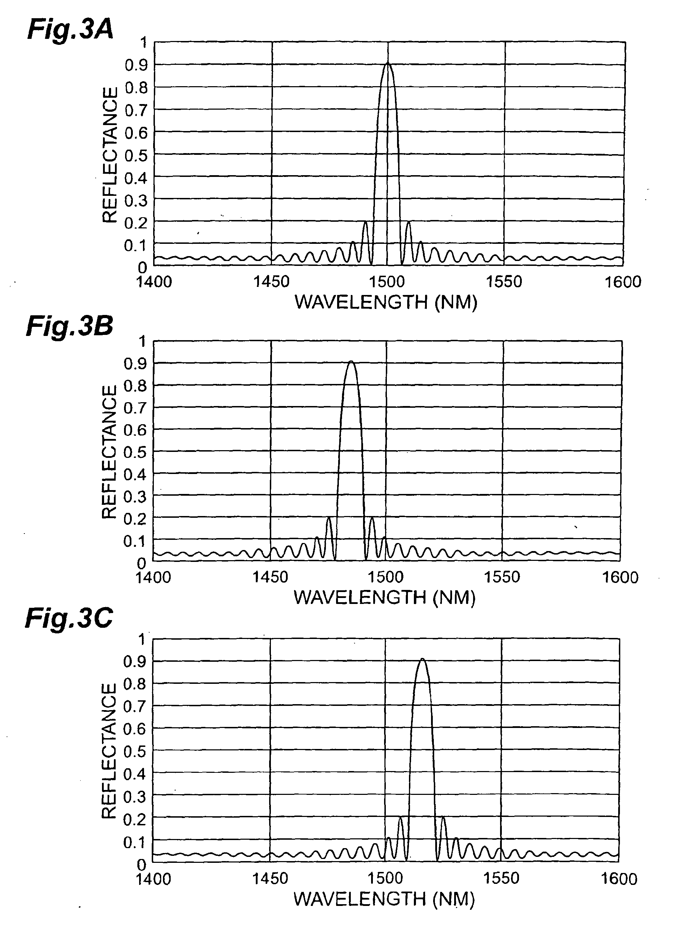

Figs. 3A, 3B, and 3C are graphs, showing the wavelength (nm) dependence of the transmittance (arbitrary constant) of output light by a photonic crystal with a multilayer film structure, in other words, a dichroic mirror. Fig. 3A is a graph for the case where an external force is not applied to the dichroic mirror, Fig. 3B is a graph for the case where a compressive pressure is applied to give rise to a 1% lattice distortion in the direction perpendicular to the mirror, and Fig. 3C is a graph for the case where an expansive pressure is applied to give rise to a 1% lattice distortion in the direction perpendicular to the mirror. A pressure may also be applied to give rise to a lattice distortion along the mirror surface.

As shown by these graphs, the wavelength λ_{CENTER} at which the peak intensity of the reflectance spectrum lies is approximately 1.5µm in the case where there is no external force. The wavelength λ_{CENTER} shifts to approximately 1470nm (to the shorter wavelength side) when a 1% compressive strain is applied and shifts to 1530nm (to the longer wavelength side) when a 1% expansive strain is applied.

Though the characteristics shown in these graphs are not those of the photonic crystal 2 shown in Fig. 1, the trends of variation of the optical characteristics of photonic crystal 2 are the same as those shown in these graphs and the wavelength band of the output light varies with external force, in other words, strain.

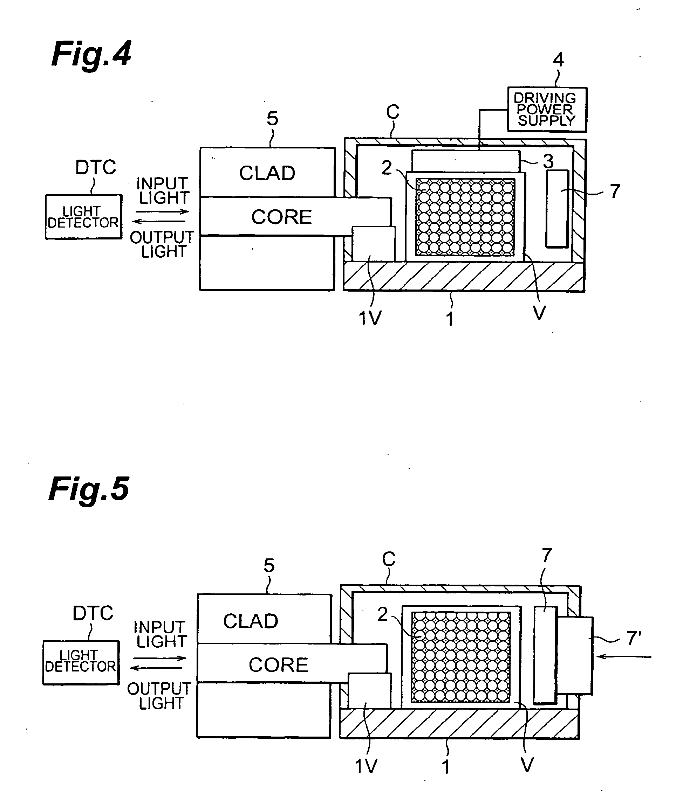

Fig. 4 is an explanatory diagram of an optical device that is a wavelength shifter.

This wavelength shifter comprises a fixing part 1V, to which the end of a single optical fiber 5 is fixed; a reflecting mirror 7, disposed along the light path of the light emitted from the abovementioned end and disposed so that the light will be returned by reflection to the abovementioned end; a photonic crystal 2, disposed in the light path between the abovementioned end and reflecting mirror 7; and an external force application means 3, which applies an external force to photonic crystal 2.

Here, though the light that is emitted from the single optical fiber 5 is reflected by reflecting mirror 7, since photonic crystal 2 is disposed inside the light path, the light output from photonic crystal 2 can be varied in accordance with the external force applied by piezoelectric element 3.

Fig. 5 is an explanatory diagram of an optical device that is a pressure sensor. This device differs from that shown in Fig. 4 in that reflecting mirror 7 is arranged to press photonic crystal 2. Pressing part 7' is slidably held with respect to a cover member C, and reflecting mirror 7 is mounted to the side of pressing member 7' at the inner side of cover member C.

This pressure sensor comprises a fixing part 1V, to which an end part of an optical fiber 5 is fixed; a photonic crystal 2, disposed in the light path of the light emitted from the abovementioned end part; a light detector DTC, detecting the light emitted from photonic crystal 2, and a pressing part 7' , disposed at a position enabling pressing of photonic crystal 2.

When pressing part 7' is pressed, photonic crystal 2 deforms in accordance with this pressure, and when this is detected by light detector DTC, the detected value will indicate the pressure.

Also, in the case where an external force is applied so that a fixed detected value will be detected by light detector DTC, the control amount of the external force applied to the photonic crystal 2 will indicate the pressure.

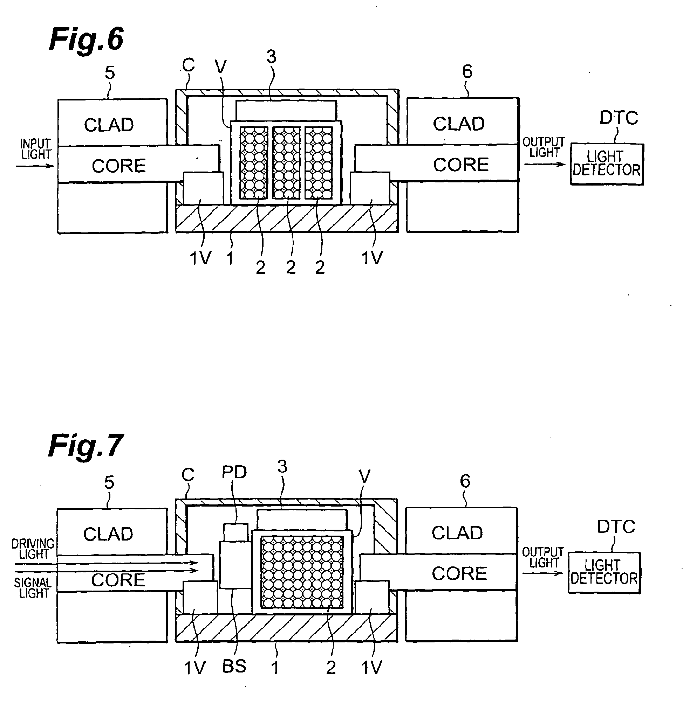

Fig. 6 is an explanatory diagram of an optical device of another embodiment that is an optical fiber coupling device.

This optical device of this invention comprises: a fixing part 1V, to which an end part of an optical fiber 5 is fixed; and photonic crystals 2, having plasticity and being disposed in the light path of the light emitted from the abovementioned end part; and the photonic crystals 2 comprise at least two photonic crystals 2 that differ in photonic band gap.

In this case, since the two or more photonic crystals 2 having different photonic band gaps differ in wavelength selectivity, more precise wavelength selection can be realized by the combination. An external force may be applied to each photonic crystal independently or an external force may be applied simultaneously. Vessel V is equipped with partitions between the respective photonic crystals 2.

Fig. 7 is an explanatory diagram of an optical device of yet another embodiment that is an optical fiber coupling device.

This embodiment comprises: fixing parts 1V to which end parts of optical fibers 5 and 6 are fixed; a photonic crystal 2, disposed in the light path of light emitted from an abovementioned end part; a light detector (photodiode) PD, which branches the light (driving light) emitted from photonic crystal 2 by means of an optical branching element BS and then detects this light; and a pressing part, disposed at a position enabling pressing of photonic crystal 2.

This embodiment comprises: fixing parts 1V to which end parts of optical fibers 5 and 6 are fixed; a photonic crystal 2, disposed in the light path of light emitted from an abovementioned end part; a piezoelectric element 3, which applies an external force to photonic crystal 2, and a light detector (photodiode) PD, which outputs an electric signal for driving piezoelectric element 3 in accordance with input light; and the input light (driving light) is introduced into light detector PD via optical fiber 5. Furthermore, the driving light is detected by the optical detector PD upon being branched by an optical branching element BS.

Here, the input light input from optical fiber 5 is input into light detector PD via optical branching element BS. Light detector PD outputs an electrical signal for driving piezoelectric element 3 and piezoelectric element 3 is thereby driven to deform photonic crystal 2. Light that is input as another signal light into photonic crystal 2 via optical fiber 5 is subject to wavelength selection due to the deformation of photonic crystal 2 and is then output from this photonic crystal.

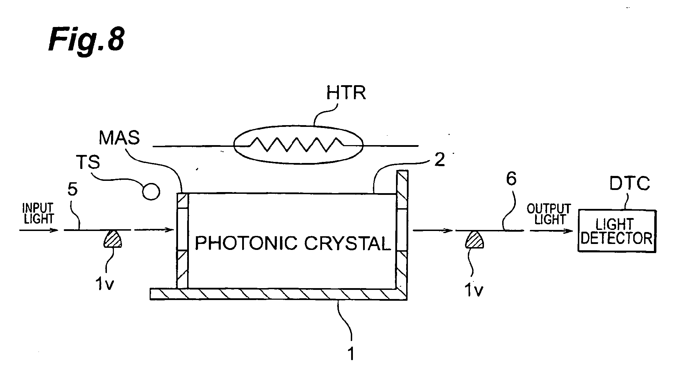

An additional arrangement is shown in Fig. 8.

That is, this acceleration sensor is an acceleration sensor that is provided on a moving body and comprises fixing parts 1V to which end parts of optical fibers 5 and 6 are fixed; a photonic crystal 2, disposed in the light path of light emitted from an abovementioned end part; and a light detector (photodiode) DTC, which detects the light emitted from photonic crystal 2.

When the moving body undergoes an accelerated motion, photonic crystal 2 deforms at least by its own weight and its photonic band gap changes. In a case where a mass body MAS of a predetermined mass is put in contact with photonic crystal 2, the mass body urges photonic crystal 2 in accordance with the acceleration.

Since the intensity and wavelength of the light that is output from photonic crystal 2 varies in accordance with the acceleration, when this light is detected by light detector DTC, the detected value will indicate the acceleration.

Also, in a case where external force is applied to photonic crystal 2 so that a fixed detected value will be detected by light detector DTC, the control amount of the external force applied to photonic crystal 2 will indicate the acceleration.

For stabilization of the amount of deformation of photonic crystal 2, the temperature of photonic crystal 2 is preferably constant. In such a case, this optical device comprises: a fixing part 1V, to which an end part of an optical fiber 5 is fixed; a photonic crystal 2, having plasticity and being disposed in the light path of the light emitted from the abovementioned end part; a heater HTR, heating the photonic crystal 2; and a temperature sensor TS, measuring the temperature of photonic crystal 2; and the power supplied to heater HTR is controlled in accordance with the temperature measured by temperature sensor TS.

By controlling the power supplied to heater HTR so that the temperature measured by temperature sensor TS will be constant, the temperature of photonic crystal 2 can be made constant to enable wavelength selection of high precision.

### Industrial Applicability

This invention can be applied to an optical fiber coupling device and an optical device.

## Claims

1. An optical fiber coupling device comprising:
a fixing part (1), to which the respective ends of two optical fibers are fixed;
a photonic crystal (2), disposed in the light path of light that propagates between said ends; and
an external force applicationmeans (3), adapted to apply a controlled external force to said photonic crystal.

2. An optical device comprising the optical fiber coupling device according to claim 1, and a light detector, outputting an electric signal for driving said external force application means in accordance with input light; wherein said input light is introduced via said optical fiber into said light detector.

## Patentansprüche

1. Faseroptisches Kopplungselement, das Folgendes umfasst:
einen Befestigungsteil (1), an dem die jeweiligen Enden zweier optischer Fasern befestigt werden,
einen Photonenkristall (2), der im Strahlengang von Licht angeordnet ist, das sich zwischen den Enden ausbreitet, und
ein Mittel (3) zum Anlegen einer externen Kraft, das dafür ausgelegt ist, eine geregelte externe Kraft an den Photonenkristall anzulegen.

2. Faseroptisches Bauelement, das das faseroptische Kopplungselement nach Anspruch 1 umfasst sowie einen Photodetektor, der ein elektrisches Signal ausgibt, mit dem das Mittel zum Anlegen einer externen Kraft zugeführtem Licht entsprechend angesteuert wird, wobei das zugeführte Licht über die optische Faser in den Photodetektor geleitet wird.

## Revendications

1. Dispositif de couplage de fibre optique comprenant :
une partie de fixation (1), sur laquelle les extrémités respectives de deux fibres optiques sont fixées ;
un cristal photonique (2), disposé dans le trajet lumineux de la lumière qui se propage entre lesdites extrémités ; et
un moyen d'application de force externe (3), adapté pour appliquer une force externe contrôlée sur ledit cristal photonique.

2. Dispositif optique comprenant le dispositif de couplage de fibre optique selon la revendication 1, et un détecteur de lumière, transmettant un signal électrique permettant d'entraîner ledit moyen d'application de force externe selon la lumière transmise ; dans lequel ladite lumière transmise est introduite via ladite fibre optique dans ledit détecteur de lumière.
